# EUROPEAN PATENT APPLICATION

(11) **EP 2 638 809 A1**
(43) Date of publication of application: **18.09.2013**
(21) Application number: 11839390.9
(22) Date of filing: 07.11.2011
(51) Int. Cl.: A23L 1/212, A23L 1/30, A23P 1/06

(54) **VEGETABLE DUST FOR FOOD AND PLANT PROTECTION, AND PREPARATION METHODS THEREOF**

(30) Priority: 11.11.2010 ES 201031661 P
(71) Applicant: Consejo Superior De Investigaciones Científicas (CSIC), 28006 Madrid (ES)
(72) Inventor: GARCÍA VIGUERA, Cristina, E-28033 Madrid (ES); MORENO FERNÁNDEZ, Diego A., E-28033 Madrid (ES); CARVAJAL ALCARAZ, Micaela, E-28033 Madrid (ES); MARTÍNEZ BALLESTA, Mª Carmen, E-28033 Madrid (ES)
(74) Representative: Pons Ariño, Maria Purificación
(86) International application number: PCT/ES2011/070760
(87) International publication number: WO 2012/062947

(57) **Abstract**

The invention relates to a method for the production of vegetable dust for use in food and plant protection, preferably vegetable dust obtained from plants from the Brassicaceae (crucifers) family. The invention also relates to vegetable dust obtained using the method of the invention and to the use of said vegetable dust in food and for plant protection as a plant insecticide and herbicide. The invention further relates to a food product comprising the vegetable dust of the invention, in the form of a foodstuff, drink, food supplement, food additive, and to a plant insecticide and herbicide comprising the vegetable dust of the invention

## Description

The present invention refers to a method of production of a plant-derived powder for its use as foodstuff and in plant protection, preferably obtained from vegetables of the *Brassicaceae* (Crucifers) family, and more preferably from Broccoli (*Brassica oleacearea*). Moreover, the present invention also refers to the use of the obtained powder through the process in the invention, in foodstuffs and plant protection.

### State of the art

In order to preserve the fruits and vegetables using drying processes, to the present date different methods are available, from the conventional sun-drying, hot air drying, microwave-assisted drying, low energy air drying by adsorption drying, osmotic dehydration, and freeze-drying/lyophilizing, to the non-conventional methods such as foam drying, modified atmosphere drying, low-pressure vapour drying, impingement drying (using hot air or hot vapour) or "refractance Windows"® drying, among many. The percentage of nutrients and bioactive substances of the dried fruits and vegetables depends to a great extent on the drying process, being the temperature and drying times key factors (Santos et al. Drying Technology 26:1421-1437)

In the preparation of plant-derived extracts for applications in food and health, to the present date, the bioactive material has been obtained by proceedings using organic solvents and other extractants such as water, in variable proportions. For example, it has been described the extraction of ingredients rich in glucoraphanin (aliphatic glucosinolate, parental of the bioactive isothiocyanate sulforaphane, with beneficial properties) from broccoli, by means of solvent extraction (US2008/0131578). Even it is also common to add substances involved in the maintenance of the plant material once dried, by immersion of said material in a preparative substance with the special characteristic that once the vegetable is rehydrated, it recovers a similar aspect to the original material, and also, participates of the preservation of the dehydrated material (US4832969, WO92/10940). The freeze-drying has been described as a drying method for vegetables, and particularly broccoli. In relation to obtain a plant powder, a concentrated powder from broccoli rich in glucoraphanin by means of preparation of the plant material and the processes of filtration, extraction, concentration and chemical extraction has been described. It has been also described the drying of broccoli by means of an air stream of determined speed combined with temperatures between 50 and 100 °C (Mrkic et al. 2010. Acta Alimentaria 39:167-174; Mrkic et al. 2006. Journal of the Science of Food and Agriculture 86:1559-1566)

Recent studies show that the components in fruits and vegetables may be beneficial at the nutritional and sanitary level, as they contain beneficial elements for the human body. The concept of developing crops for health and not only for foods and fibers is changing for biotechnology and medicine. The connection between plants and health is the origin of the launching new generations of products botanical based with nutritional and healthy uses. They are demanded to be tasty, safe, and easy to consume, as many of these products would complement the diet and the treatments of the consumers to help in their health status and in the reduction of the risk of suffering certain general diseases. Nutritive foods and well-being has been described and offer opportunities to develop new scientific based products for attendinf the demands of the consumers (Raskin et al. 2002. Trends in Biotechnology 20: 522-531). The use of vegetables as nutritional supplements in beverages is also described (US2009110789), specifically for the broccoli powder as well as the supplementation of broccoli powder in bread. Also, plant compositions for feedstuffs and the use of plant composition for animal feeds has been described, where the composition has been obtained by freeze-drying.

Plant-derived components are also used in the cosmetic industry, for example, by using sprout or germinating seeds extracts from different fruits, berries, and cruciferous plants, including broccoli, with application to lotions, massage creams, nutritive creams, gels, anti-aging products, and skin detoxification effects, even in the treatment of skin associated diseases (US2009/0306219). Vegetables including broccoli and its bioactives as additives are also used in anti-aging formulations may reach in some cases from 0.1 up to 10% of the total weight, by using plant extracts as solid powders, pills, capsules or oily precipitates (US 2009/0324522).

Many epidemiological studies indicate that cruciferous foods, including broccoli (*Brassica oleraceae*), are rich source of bioactive compounds from the plant secondary metabolism, rich in nitrogen and sulfur, the glucosinolates, as well as phenolic natural antioxidants (flavonoids, anthocyanins, and phenolic acids), vitamins (A, C, E, K, etc.) and essential minerals (N, P, K, Ca, Fe, Mn, Mg, Zn, Cu, Se, etc.) (Fahey et al. 2001. Phytochemistry 56: 5-51; Moreno et al. 2006. J. Pharmaceutical Biomedical Analysis 41:1508-1522). The consumption of these vegetables and derived products has been associated with beneficial effects in the prevention of chronic diseases, such as processes of cardiovascular pathologies and cancer (Moreno et al., 2006. Journal of Pharmaceutical and Biomedical analysis 41:1508-1522; Jahangir et al. 2009. Comprehensive Reviews in Food Science and Food Safety 8:31-43). Besides, the use of harvest remains from Brassica (by-products) as herbicide has been also demonstrated (Hoagland et al. 2008, Soil Biology and Biochemistry 40:1689-1697).

The *Brassicaceae,* (crucifers) family owns almost 3,500 plant species some of them with economic relevance by the high worldwide consumption. Many vegetables of the cruciferous family, contain nutrients and beneficial bioactive compounds, in addition to fiber and low calories, such as cabbages, Brussels sprouts, cauliflower, broccoli, pack-choi, bok-choi, mustards, radishes and turnips. The evidences showing the positive association between the consumption of *Brassicaceae* vegetables and the reduction of the risk of suffering different diseases and how these vegetables are adding value to the diet, would leading the convenience of increasing the consumption in the general population (Jahangir et al. 2009. Comprehensive Reviews in Food Science and Food Safety 8:31-43)¹.
¹ American Cancer Society. Broccoli.
http://www.cancer.org/treatment/treatmentsandsideeffects/complementaryandalternativemed icine/dietandnutrition/broccoli

The current demand of natural ingredients without chemicals or artificial additives in the foods or products is growing exponentially in the industry that need food beverage, food supplements, healthy additives, and more nutritionally-complete, and organoleptic acceptable foods, with better shelf life, more appealing and attracting to the consumer and able to help in the reduction of the use of co-products or by-products in the agri-food and industrial activities.

### Description of the Invention

The present invention refers to a procedure for obtaining a plant powder with 100% natural food ingredients, high levels of bioactive compounds and nutrients, with suitable characteristics of solubility in different media (water, hydroalcoholic, etc.), food and pharma grade, free of chemicals or organic solvents, and free from any other component or ingredient not present in the original and natural plant material in origin or during the production phase.

Therefore, the first aspect of the present invention refers to the process for obtaining a plant origin powder comprised by:
a. The introduction of a washed plant in a drying tunnel of 15 to 50 meters length, under temperature set of 100 and 50 °C over a period of 10 and 5 hours, and
b. Grinding of the product resulting from (a).

From now on, this process will be named "process of the invention". The plant origin powder obtained by this process will be named "plant powder of the invention".

Preferibly, the process of the invention comprises a drying tunnel of a length between 25 and 35 meters, the temperature of entrance of material is setted-up at 75 - 80 °C, and the exit temperature between 60 - 65 °C, with a permanence time in the tunnel not longer than 7 - 8 hours. Because of these conditions, the preferred setting of the drying tunnel of the invention is of 25 and 35 meters of length. In another preferred realization, the entrance temperature is between 75 - 80 °C. In a different preferred realization, the exit temperature is between 60 - 65 °C. In a different preferred realization, the permanence time in the tunnel is between 7 - 8 hours.

In the present invention, the plant material used in the procedure of the invention may comprise the whole plant, or plant parts. Plant parts can be seeds, germinating seeds, sprouts, leaves, stems, roots, flowers, inflorescences, or any possible combination.

It would take part of the process of the present invention, the by-products generated by the agricultural activity in the commercial production of crops, since they are a good source of nutrients and ingredients potentially functional. The term "byproduct" is understood as a non-marketable plant part, or the non-commercial plant product obtained under unfavorable environmental or growth conditions that does not fulfill a quality standard for the market and represents the loss of harvest in the commercial exploitation but it preserves bioactive compounds.

In the present invention, "bioactive compounds" are understood as those compounds of plant origin that may exert a biological function in the organism, either mammal or human being, and in this invention is refereed to compositions rich in glucosinolates (for example, glucoraphanin) and phenolic compounds, minerals, and others. The process of the invention, because is using heat, eliminates the plant myrosinase, that hydrolyse glucosinolates to isothiocyanates (for example, sulforaphane), preserving the glucosinolates naturally present in the plant material also in the plant powder of the invention.

Since the content in bioactive compounds and nutrients is important in the plant-derived powder, the plants (whole plant or plant parts) that is introduced in the drying tunnel of the process of the invention should carry a content (on a dry weight basis) of at least 0.5% glucosinolates, 1.5% of phenolic compounds, 2% calcium, 2.7% potassium, 0.7% sodium, 0.4% magnesium, 0.03% iron, 0.01 % manganese and 0.004% zinc.

The bioactive compounds and nutrients may be obtained from whole plants or plant parts coming from different crops and vegetables, preferentially from the *Brassicaceae* family, and preferred *Brassica spp within.* One preferred fulfillment of the invention process where the vegetable is a *Brassicaceae* plant. In one more preferred realization, the vegetables are turnip, cress, radish, kohlrabi, cabbage, red cabbages, rutabaga, brussels sprouts, mustards, different varieties of broccoli (brocolini, broccoli, romanesco broccoli, white or purple broccoli, etc.) as well as other root, leaf or inflorescence vegetables such as sage, fenugreek, onion or garlic, and it may contain any of their natural bioactive compounds. In one realization even more preferred, the plant is broccoli.

In the present invention, broccoli is understood as any variety of *Brassica oleracea* developed in any type of growth and environmental conditions and that may be enriched in a mineral rich medium with agronomical conditions that would favor its organoleptic and nutritive properties.

The second aspect of the invention referred to the plant powder obtained by the process of the invention. The plant powder of the invention comprises an effective amount of bioactive compounds.

In the present invention, an 'effective amount' is understood as the quantity of bioactive compounds enough to have efficacy at the nutritional and sanitary level for animals and human subjects of the powder obtained with the process of the invention, or to have efficacy against pests and predators (herbicide, insecticide).

One preferred realization of the second aspect of the invention is the plant-origin powder that also incorporates additives, preferably not chemical agents and not organic solvents. It is also part of the invention the powder of the invention that that also incorporates sweeteners to contribute to the improvement of the organoleptic characteristics of the products that contain the broccoli powder.

A third aspect of the present invention is referred to the use of the plant powder obtained in the procedure of the invention to prepare a foodstuff product in the format of edible food, beverage, dietary supplement, or food additive. Preferably, the use of plant powder of the invention may be used in the elaboration of foodstuff beverage, dietary supplement and food additive selected from a list that includes: juices, milkshakes, smoothies, herbal teas and infusions, isotonic drinks, dairy, cheese, yogurts, soups, sauces, dressings, vegetable concentrates, vinegars, oils, salts, cookies, cereal-based products, breads, bakery and confectionery products and premixes, patisseries, cakes and sweets, fried products, jelly, candy, meat or fish products, preparations or premixes, caviar substitute, pills, tablets, capsules, sprays, and other products for ingestion, and supplements and additives for feedstuffs. Preferably, for the usage of the plant powder is incorporated in a dairy product, yogurt and cheese for example. Other preferred invention is the use of the plant powder of the second aspect of the invention in the preparation of bakery and confectionery products such as breads, bread sticks, snacks, muffins, cakes and cupcakes.

The fourth aspect of the invention is referred as the use of the plant powder obtained in the procedure of the invention for the preparation of a plant pest control product, herbicide or insecticide.

A fifth aspect of the invention is referred to foodstuff which incorporate the plant powder obtained in the procedure of the invention that is edible, beverage, dietary supplement or food additive.

Different food products (dairy, bakery and confectionery) were elaborated with the plant powder obtained following the procedure detailed in the first aspect of the invention and it was determined that in all cases, the food products could contain between 1% and 8% of the total weight of the plant powder in any of the different grinding sizes without affecting to the correct preparation of the product. Because of this reason, one preferred realization of the fifth aspect of the invention is referred to the foodstuff including the plant powder of the invention where the plant powder represents content between 1% and 8% of the weight of the ingredients used in the preparation of the foodstuff.

The sixth aspect of the invention is referred to a plant pest control (herbicide or insecticide) that includes the plant powder of the invention.

### FIGURE DESCRIPTIONS

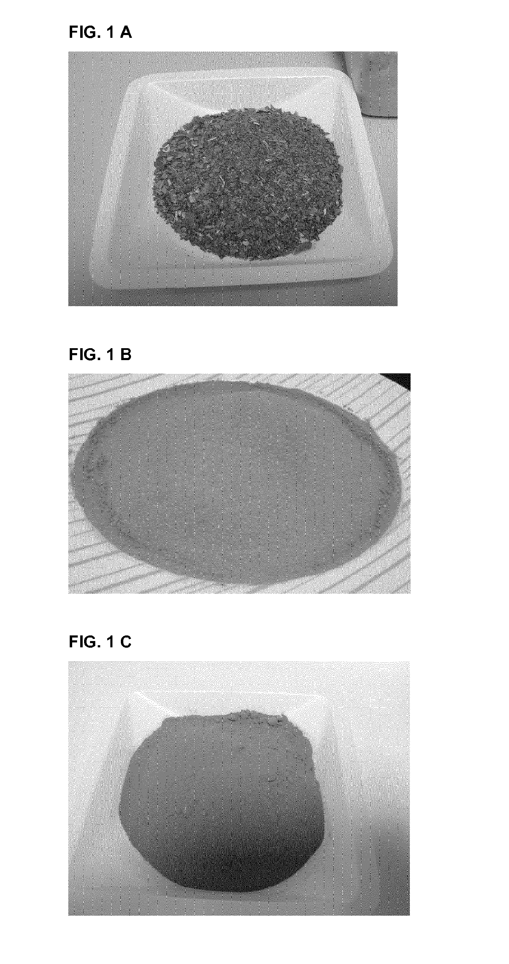

**Figure 1****. Plant origin powder resulting of the grinding of broccoli plants.** The broccoli powder shown in the figure was obtained after grinding in stone mill stems and leaves of broccoli. **A.** Powder obtained in the first grinding. **B.** Powder obtained in the second grinding. **C.** Powder obtained in the third grinding.

### EXAMPLES

Next, the invention will be illustrated with tests carried out by the inventors that will point out the procedure of the invention and the utility of the plant powder obtained according to the procedure of the invention.

### EXAMPLE 1: Procedure to obtain a broccoli powder

The preparation of the broccoli powder was carried out by using full leaves of broccoli plant. The procedure of the elaboration consisted in the collection of plant material from the field, washing, and introduction in drying tunnel. The tunnel had a length between 25 and 35 m, with a head temperature of 75-80 °C and exit of 60-65 °C. The time of permanence in the tunnel was 7-8 hours. The resulting product was grinded using industrial stone mill to different particle sizes for desired texture of powder (Fig. 1 (A, B, and C)). The resulting powder was stored in tight closed bags protected from direct light, intended for different uses as indicated, as food supplement of high nutritional value or for plant pest control (herbicide and insecticide).

### EXAMPLE 2. Bioactive compounds fom broccoli powder

The composition of bioactive compounds in the plant powder of the invention was evaluated and compared with the composition of commercial products derived from broccoli.

In Table 1, it can be seen that the plant powder of the invention is lacking the myrosinase activity that degrades glucosinolates. The plant powder from the invention is the only composition with the higher number of bioactive compounds, without degradation enzymes for glucosinolates. Besides, the plant powder of the invention does not contain any external or chemical agent, added during the production process, such as organic solvents that are commonly used to obtain plant extracts. In the table the quantity of bioactive compounds is indicated and expressed in mg/g. The (--) symbol refers to undone analysis for that particular bioactive compound.

**Table 1. Bioactive Compounds present in powder or extract of Broccoli.**

| Bioactive Compounds (mg/g) | Plant Powder of the invention | EnduraCell® | Starwest | Natural Foods | Dracco® | Amorós® |
|---|---|---|---|---|---|---|
| | Powder | Powder | Powder | Extract | Extract | Extract |
| Glucosinolates | 10 | 30 (glucoraphanin) | No | No | 2.2-2.6 | 8.9-10 |
| Myrosinase | No | Yes | -- | -- | -- | -- |
| Sulforaphane | No | -- | No | No | -- | -- |
| Phenolic Compounds | 80 | -- | -- | -- | -- | -- |
| Potassium (K) | 27 | -- | -- | -- | -- | -- |
| Sodium (Na) | 7 | -- | -- | -- | -- | -- |
| Calcium (Ca) | 29 | -- | -- | -- | -- | -- |
| Iron (Fe) | 0.3 | -- | -- | -- | -- | -- |
| Manganese (Mn) | 0.4 | -- | -- | -- | -- | -- |
| Copper(Cu) | 0.03 | -- | -- | -- | -- | -- |
| Zinc (Zn) | 0.4 | -- | -- | -- | -- | -- |
| Magnesium (Mg) | 4.4 | -- | -- | -- | -- | -- |

### EXAMPLE 3. FOOD PRODUCTS THAT INCORPORATE THE PLANT POWDER FROM THE INVENTION.

Aiming to test the use of the broccoli powder in the elaboration of food products, different foodstuffs were prepared containing the plant powder of the invention described in the Example 1. In all cases, the food products were elaborated following traditional and reproducible methods by expert staff. Then, food products more nutritious and healthy were obtained which contain the bioactive compounds and nutrients of the plant powder of the invention as follows:

### 3.1. - Example of dairy product that incorporates the plant powder of the invention.

In the case of dairy products, a fresh cottage cheese was prepared that contained a 2% of broccoli powder obtained according to the procedure of the invention previously described. The broccoli powder was added after the separation of curd from whey.

### 3.2.- Example of a bakery and confectionary product that incorporates the plant powder of the invention.

It has been obtained a fresh baked bread containing 2.5% of broccoli powder, breadsticks with 5% of broccoli powder, and cake and muffing including 2% of broccoli powder. In all cases, the broccoli powder of the invention was added together with all the ingredients prior to baking.

## Claims

1. Process for obtaining a vegetable powder comprising:
a. Introducing a washed vegetal in a drying tunnel of between 15 and 50 meters long, at a temperature of between 100 and 50°C over a period of between 10 and 5 hours, and
b. Grinding of the product resulting from step (a).

2. Process according to claim 1 wherein the drying tunnel has a length between 25 and 35 meters.

3. Process according to claim 1 or 2, wherein the inlet temperature in the tunnel is between 75 and 80 °C.

4. Process according to claims 1 to 3, wherein the outlet temperature is between 60 and 65 °C.

5. Process according to claims 1 to 4, wherein the time of permanence in the tunnel is between 7 and 8 hours.

6. Process according to any of claims 1 to 5, wherein the vegetal used comprises the whole plant or parts thereof that can be selected from the list comprising: seeds, sprouts, leaves, stems, roots, immature flowers or any combination thereof.

7. Process according to claim 6, wherein the whole plant or parts thereof comprises at least a concentration expressed on a dry weight basis of 0.5% of glucosinolates, at least 1.5% of phenolic compounds, and a mineral content of at least a 2% of Calcium, a 2.7% of potassium, a 0.7% of sodium, a 0.4% of magnesium, a 0.03% of iron, a 0.01% of manganese, and a 0.004% of zinc.

8. Process according to any of claims 1 to 7 wherein the vegetal is a plant from the *Brassicaceae* family.

9. Process according to claim 8 wherein the vegetal is selected from the list comprising the plant varieties: broccoli, mustard, cabbage, kohlrabi, radish and cress.

10. Process according to claim 9 wherein the vegetal is broccoli.

11. Vegetable powder obtained by the process according to any of claims 1 to 10.

12. Vegetable powder according to the previous claim further comprising other additives.

13. Use of a vegetable powder according to any of claims 11 or 12 for the preparation of a food product, wherein said product is an edible product, beverage, dietary supplement or food additive.

14. Use of a vegetable powder according to claim 13, wherein the food product is selected from the list comprising: juices, milkshakes, infusions, dairy products, isotonic drinks, soups, sauces, salads, vegetable concentrates, vinegars, oils, salts, cookies, cereals, breads, other bakery and confectionary products, fried products, jellies, candies, meat and fish products, caviar substitute, pills, tablets, capsules, sprays, and other edible products and animal dietary supplements and additives for feedstuff.

15. Use of a vegetable powder according to claim 14 wherein the food product is a dairy product.

16. Use of a vegetable powder according to claim 14 wherein the food product is a bakery or confectionary product.

17. Use of a vegetable powder according to any of claims 11 or 12 for the preparation of a vegetal herbicide or insecticide.

18. Food product comprising the vegetal powder according to any of claims 11 or 12 wherein said product is an edible product, beverage, dietary supplement or food additive.

19. Food product according to claim 18 wherein the vegetable powder weight percentage is between 1 and 8% of the total weight of the used ingredients for the elaboration of the food product.

20. Vegetable herbicide or insecticide comprising the vegetal powder according to any of claims 11 or 12.
